(19) Europäisches Patentamt
European Patent Office
Office européen des brevets

(11) **EP 4 753 161 A1**

(12) **EUROPEAN PATENT APPLICATION**
published in accordance with Art. 153(4) EPC

(43) Date of publication:
**03.06.2026 Bulletin 2026/23**

(21) Application number: **24845763.2**

(22) Date of filing: **28.05.2024**

(51) International Patent Classification (IPC):
*H04B 7/04* (2017.01)   *H04B 7/06* (2006.01)
*H01Q 15/14* (2006.01)   *G06V 10/20* (2022.01)
*G06N 20/00* (2019.01)

(52) Cooperative Patent Classification (CPC):
**G06N 20/00; G06V 10/20; H01Q 15/14; H04B 7/04;
H04B 7/06**

(86) International application number:
**PCT/KR2024/007267**

(87) International publication number:
**WO 2025/023459 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023 KR 20230097829
31.07.2023 KR 20230100103**

(71) Applicants:
• **Samsung Electronics Co., Ltd.**
**Suwon-si, Gyeonggi-do 16677 (KR)**
• **POSTECH Research and Business Development
Foundation**
**Pohang-si, Gyeongsangbuk-do 37673 (KR)**

(72) Inventors:
• **KO, Seungtae**
**Suwon-si, Gyeonggi-do 16677 (KR)**
• **KIM, Daehyeon**
**Pohang-si, Gyeongsangbuk-do 37673 (KR)**
• **LEE, Jungyub**
**Suwon-si, Gyeonggi-do 16677 (KR)**
• **HONG, Wonbin**
**Pohang-si, Gyeongsangbuk-do 37673 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR TRANSMITTING BEAMFORMING SIGNAL**

(57)    Provided is a control device for a reconfigurable intelligence surface (RIS), and the control device may comprise at least one transceiver and at least one processor. The at least one processor may be configured to: on the basis of detection of an obstacle related to a communication path between a communication device and the RIS, acquire characteristic information on the obstacle; and on the basis of the characteristic information on the obstacle, acquire phase distortion information on a plurality of unit cells of the RIS. The at least one processor may be configured to: on the basis of the phase distortion information on the plurality of unit cells of the RIS, acquire beamforming control information for the RIS; and transmit, to the RIS via the at least one transceiver, a control signal for providing the beamforming control information. The beamforming control information may be used to provide reflection signals from the RIS on the basis of phase shifts for incident signals.

FIG. 4A

**Description**

**[Technical Field]**

The present disclosure relates to an electronic device and a method for transmitting a beamforming signal.

**[Background Art]**

In order to achieve a high data transmission rate, a communication system are considered to be implemented in an ultra-high frequency (mmWave) band (e.g., such as a 28 gigahertz (GHz) band, a 39 GHz band, and a 60 GHz band). In order to alleviate path loss of a radio wave in the ultra-high frequency band and increase a transmission distance of a radio wave, beamforming, massive MIMO, full dimensional MIMO (FD-MIMO), array antenna, analog beam-forming, and large scale antenna technologies are being discussed in the communication system.

The above-described information may be provided as a related art for a purpose of helping understanding of the present disclosure. No claim or determination is raised as to whether any of the above-described descriptions may be applied as a prior art related to the present disclosure.

**[Disclosure]**

**[Technical Solution]**

In embodiments, a control device for a reconfigurable intelligence surface (RIS) is provided. The control device may include at least one transceiver, and at least one processor. The at least one processor may be configured to obtain, based on detection of an obstacle associated with a communication path between a communication device and the RIS, characteristic information for the obstacle. The at least one processor may be configured to obtain phase distortion information for a plurality of unit cells of the RIS based on the characteristic information for the obstacle. The at least one processor may be configured to obtain beamforming control information for the RIS based on the phase distortion information for the plurality of unit cells of the RIS. The at least one processor may be configured to transmit, to the RIS through the at least one transceiver, a control signal for providing the beamforming control information. The beamforming control information may be used to provide reflection signals based on a phase shift for incident signals in the RIS.

In embodiments, a method performed by a control device for a reconfigurable intelligence surface (RIS) is provided. The method may include obtaining, based on detection of an obstacle associated with a communication path between a communication device and the RIS, characteristic information for the obstacle. The method may include obtaining phase distortion information for a plurality of unit cells of the RIS based on the characteristic information for the obstacle. The method may include obtaining beamforming control information for the RIS based on the phase distortion information for the plurality of unit cells of the RIS. The method may include transmitting, to the RIS, a control signal for providing the beamforming control information. The beamforming control information may be used to provide reflection signals based on a phase shift for incident signals in the RIS.

In embodiments, an electronic device is provided. The electronic device may include a reconfigurable intelligence surface (RIS) including a plurality of unit cells, and at least one processor. The at least one processor may be configured to configure beamforming control information corresponding to a first phase vector to the RIS. The at least one processor may be configured to obtain, based on detection of an obstacle associated with a communication path between a communication device and the electronic device, characteristic information for the obstacle. The at least one processor may be configured to obtain phase distortion information for the plurality of unit cells based on the characteristic information for the obstacle. The at least one processor may be configured to obtain a second phase vector for the plurality of unit cells based on the phase distortion information for the plurality of unit cells. The at least one processor may be configured to configure the beamforming control information corresponding to the second phase vector to the RIS. The beamforming control information may be used to provide reflection signals based on a phase shift for incident signals in the RIS.

**[Description of the Drawings]**

FIG. 1 illustrates an example of a wireless communication environment.
FIG. 2 illustrates an example of a communication environment in which an obstacle between a base station and a reconfigurable intelligence surface (RIS) is positioned.
FIGS. 3A to 3C illustrate examples of an RIS.

FIG. 4A illustrates an example of an operation of a beamforming codebook of an RIS.

FIG. 4B illustrates an example of a change in a phase distribution due to an obstacle.

FIG. 5 illustrates incident signals and reflection signals of an RIS.

FIGS. 6A and 6B illustrate examples of a phase pattern for beamforming.

FIG. 7 illustrates an example of components of a control device for an RIS.

FIG. 8 illustrates an example of components of a base station including a reflected array antenna.

FIG. 9 illustrates an operation flow of a control device for compensating for phase distortion of an RIS.

FIG. 10 illustrates a gain according to phase distortion compensation in an RIS.

FIGS. 11A and 11B illustrate gains according to a size of an obstacle and phase distortion compensation.

FIG. 12 illustrates a gain according to a beamforming angle and phase distortion compensation.

FIG. 13 illustrates a gain according to phase distortion compensation in a reflected array antenna.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a characteristic (e.g., a characteristic, a property, a shape, a type, or a feature), a term referring to a set of values (e.g., a pattern, values, a set, a vector, a matrix, or a distribution), a term for a calculation state (e.g., a step, an operation, or a procedure), a term referring to data (e.g., a packet, a user stream, information, a bit, a symbol, or a codeword), a term referring to a channel, a term referring to network entities, a term referring to a component of a device, and the like, used in the following description, are exemplified for convenience of description. Accordingly, the present disclosure is not limited to terms described later, and another term having an equivalent technical meaning may be used.

A term referring to a component of an electronic device (e.g., a substrate, a print circuit board (PCB), a flexible PCB (FPCB), a module, an antenna, an antenna element, circuitry, a processor, a chip, a component, or a device), a term referring to a shape of a component (e.g., a structure, a structure object, a support portion, a contact portion, or a protrusion), a term referring to a connection portion between structures (e.g., a connection portion, a contact portion, a support portion, a contact structure, a conductive member, or an assembly), a term referring to circuitry (e.g., a PCB, an FPCB, a signal line, a feeding line, a data line, an RF signal line, an antenna line, an RF path, an RF module, RF circuitry, a splitter, a divider, a coupler, or a combiner), and the like, used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

A term referring to a component of an electronic device (e.g., a substrate, a print circuit board (PCB), a flexible PCB (FPCB), a module, an antenna, an antenna element, circuitry, a processor, a chip, a component, or a device), a term referring to a shape of a component (e.g., a structure, a structure object, a support portion, a contact portion, or a protrusion), a term referring to a connection portion between structures (e.g., a connection portion, a contact portion, a support portion, a contact structure, a conductive member, or an assembly), a term referring to circuitry (e.g., a PCB, an FPCB, a signal line, a feeding line, a data line, an RF signal line, an antenna line, an RF path, an RF module, RF circuitry, a splitter, a divider, a coupler, or a combiner), and the like, used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to' may be replaced with 'greater than', a condition described as 'less than or equal to' may be replaced with 'less than', and a condition described as 'greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

In the present disclosure, a signal quality may be, for example, at least one of a reference signal received power (RSRP), a beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above-described example, other terms having an equivalent technical meaning thereto or other metrics indicating a channel quality may of course be used. Hereinafter, in the present disclosure, a high signal quality means a case in which a signal quality value related to signal magnitude is large or a signal quality value related to an error rate is small. As the signal quality is higher, it may mean that a smooth wireless communication environment is secured. In addition, an optimal beam may mean a beam having a highest signal quality among beams.

The present disclosure describes various embodiments using terms used in some communication standards (e.g., a 3rd Generation Partnership Project (3GPP), an extensible radio access network (xRAN), and an open-radio access network (O-RAN)), but it is merely an example for description. Various embodiments of the present disclosure may also be easily modified and applied in another communication system.

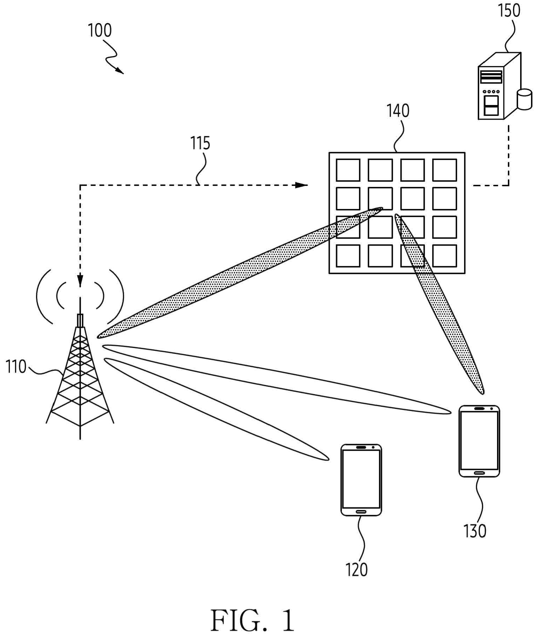

FIG. 1 illustrates an example 100 of a wireless communication environment.

Referring to FIG. 1, a wireless communication environment 100 of FIG. 1 exemplifies a base station 110, a terminal 120, and a terminal 130 as a portion of nodes that use a wireless channel.

The base station 110 is a network infrastructure for providing wireless access to the terminal 120 or the terminal 130. The base station 110 has coverage defined as a certain geographic area based on a distance at which a signal may be transmitted. In addition to a base station, the base station 110 may be referred to as a massive multiple input multiple output (MIMO) unit (MMU), an access point (AP), an eNodeB (eNB), a 5th generation node (5G node), a 5G NodeB (NB), a wireless point, a transmission/reception point (TRP), an access unit, a distributed unit (DU), a transmission/reception point (TRP), a satellite, a radio unit (RU), a remote radio head (RRH), or another term having an equivalent technical meaning thereto. The base station 110 may transmit a downlink signal or receive an uplink signal.

The terminal 120 and the terminal 130, which are devices used by a user, may perform communication with the base station 110 through a wireless channel. Hereinafter, for convenience of description, the terminal 120 is described, but the description of the terminal 120 may be applied to the terminal 130. In some cases, the terminal 120 may be operated without involvement of the user. That is, the terminal 120, which is a device that performs machine type communication (MTC), may not be carried by the user. In addition to a terminal, the terminal 120 may be referred to as a 'user equipment (UE)', a 'mobile station', a 'subscriber station', a 'customer premises equipment (CPE), a 'remote terminal', a 'wireless terminal', an 'electronic device', a 'vehicle terminal', a 'user device', or another term having an equivalent technical meaning thereto.

In an ultra-high frequency band (e.g., a millimeter wave (mmWave) frequency band or a frequency range (FR) 2 (24.25 GHz~) of 3GPP), path loss increases and multi-path fading loss increases due to a decrease in diffraction. Accordingly, deterioration of a link budget occurs. A high-gain antenna may be used to compensate for propagation loss. However, since the high-gain antenna to compensate for propagation loss has a narrow beam width, it has a drawback that a communication link becomes vulnerable to an obstacle. At least a portion of a signal may be blocked due to an obstacle between a transmitting end and a receiving end. Since the signal does not normally reach the receiving end, deterioration in communication performance may occur. A method is required for reducing path loss due to an obstacle. In order to improve performance of the wireless communication environment, a reconfigurable intelligent surface (RIS) 140 having few restrictions on an installation position and a low cost may be used.

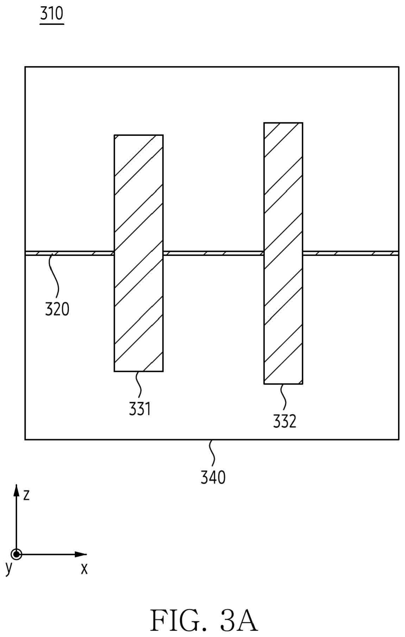

The RIS 140 may be a meta surface including controllable passive elements. The RIS 140 may adjust magnitude and/or a phase of a reflected radio wave of a signal. The RIS 140 may reflect incident signals. The RIS 140 may output reflection signals by changing magnitude and/or a phase of the incident signals. Hereinafter, the incident signals may be referred to as an incident wave, and the reflected signals may be referred to as a reflected wave. The RIS 140 may perform beamforming of a desired shape through magnitude and/or phase control. For example, a signal transmitted from the base station 110 may be reflected by the RIS 140 and transmitted to the terminal 130. The RIS 140 may adjust magnitude or a phase to control a direction from the base station 110 and a direction to the terminal 130. The RIS 140 may include a plurality of unit cells. Description of each unit cell of the plurality of unit cells is described through FIGS. 3A to 3C. It may include a structure in which a conductive pattern or shape is periodically arranged on a dielectric substrate. For example, the RIS 140 may include a frequency selective surface (FSS). The FSS has a filter characteristic that selectively passes or reflects a specific frequency band of an incident plane wave. In general, an operating frequency may be determined by an inductance or capacitance component of a unit cell arranged periodically. The FSS may include an adjustable element (e.g., a voltage of a liquid crystal layer) that affects capacitance or inductance that determines an electrical characteristic for each unit cell.

The RIS 140 may be managed by a control device 150. The control device 150 may be referred to as an RIS controller. The control device 150 may be connected to the RIS 140 through a control interface. As a non-limiting example, the control device 150 may perform communication with the base station 110 through a control link 115. For example, the control device 150 may provide information for signals received on the RIS 140 through the control link 115 to the base station 110. For example, the base station 110 may provide beamforming-related information to the control device 150 through the control link 115. Phase values for magnitude and/or phase control provided by the RIS 140 may be referred to as an RIS configuration. The RIS 140 has a reconfigurability property with respect to the RIS configuration. The RIS configuration of the RIS 140 may be provided by an external entity such as the base station 110 or a UE 120 or may be provided autonomously by the control device 150.

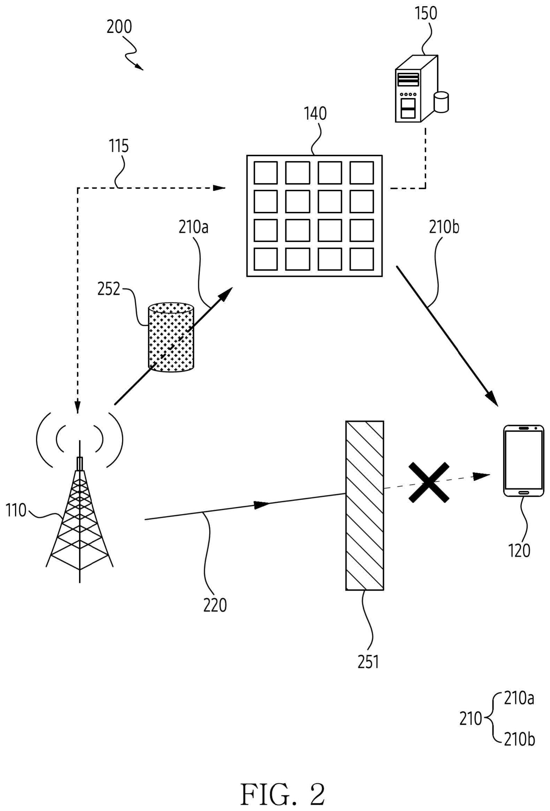

FIG. 2 illustrates an example 200 of a communication environment in which an obstacle between a base station and a reconfigurable intelligence surface (RIS) (e.g., an RIS 140) is positioned. The RIS 140 may be used to resolve a shaded region due to an obstacle and increase a signal gain by reflecting an incident wave in a desired direction through anomalous reflection and near-field focusing. For an influence due to the obstacle and for each node of FIG. 2, the description of FIG. 1 may be referred to.

Referring to FIG. 2, a beamforming technology is used as one of technologies for alleviating loss of a propagation path and increasing a transmission distance of a radio wave. Beamforming generally concentrates a reach region of a radio wave using a plurality of antennas or increases directivity of reception sensitivity with respect to a specific direction. A base station 110 may perform communication with another node (e.g., a terminal 120) through beamforming. As a frequency band for communication becomes higher, a wavelength of a signal may become shorter. As the wavelength becomes shorter, path loss may become greater. Due to large path loss, possible reception paths of the terminal 120 through multiple paths may decrease. In addition, performance degradation may occur more frequently due to multi-path fading loss. Accordingly, in high frequency communication, a line of sight (LOS) path is required to be secured. For example, the base station 110 may expect to transmit a signal to the terminal 120 through a path 210. However, due to an obstacle 251 positioned on the path 210, the signal may not be transmitted to the terminal 120. As the obstacle 251 is positioned between LOS paths between the base station 110 and the terminal 120, signals of the base station 110 may be reflected from the obstacle 251. The reflected signals may be transmitted through another path due to scattering, diffraction, reflection, and the like. However, the reflected signals may not be transmitted to the terminal 120 due to high path loss. In order to solve this problem, unlike the path 210, the RIS 140 may be disposed in a region where the LOS path is expected to be secured.

The base station 110 may perform communication with the terminal 120. The base station 110 may perform communication with the terminal 120 through the RIS 140. A path 220 between the base station 110 and the terminal 120 may include a first path 220a between the base station 110 and the RIS 140, and a second path 220b between the RIS 140 and the terminal 120. The base station 110 may perform communication with the RIS 140. For example, the base station 110 may transmit signals to the RIS 140 through the first path 220a. The signals may be incident on the RIS 140. The RIS 140 may perform communication with the terminal 120. For example, the RIS 140 may reflect the incident signals from the base station 110. The RIS 140 may transmit the reflection signals to the terminal 120 through a second path 210b.

Through the RIS 140, a channel quality (e.g., an RSRP, an SNR, or an SINR) may be improved through beamforming of the RIS 140 in a shaded region where the signal of the base station 110 does not reach. The RIS 140 may use a codebook for beamforming to reflect the incident signals at a desired angle. Each codeword of the codebook may indicate a phase pattern of a plurality of cells of the RIS 140. The RIS 140 may relay the base station 110 and the terminal 120 according to a purpose for resolving the shaded region due to an obstacle. For example, the codebook used by the RIS 140 may be configured assuming an LOS path without an obstacle 252 in the first path 220a between the base station 110 and the RIS 140. In a communication environment 200 in which the obstacle 252 is positioned on the first path 220a, performance degradation may occur when a codebook learned by assuming a communication environment (e.g., a communication environment 100) without the obstacle 252 is used. Since the RIS 140 does not receive incident signals having intended magnitude and phase, it may not transmit reflection signals having intended magnitude and/or phase. In order to alleviate the above-described problem, embodiments of the present disclosure propose techniques for analyzing an influence due to the obstacle 252 in the RIS 140 and for adjusting magnitude and/or a phase value to be applied to the incident signals through each unit cell of the plurality of cells of the RIS 140 based on the analysis result.

Hereinafter, in the present disclosure, a downlink from the base station 110 to the RIS 140 is described as an example in order to describe an environment in which a path (e.g., the first path 220a or the second path 220b) with the RIS 140 is not the LOS path, but embodiments of the present disclosure are not limited thereto. An operation of providing reflection signals by adjusting magnitude and/or a phase of incident signals may be understood as an embodiment of the present disclosure. For example, functions of the RIS 140 or operations of an RIS 150 described later may also be applied to a case that an uplink signal to the terminal 120 is reflected by the RIS 140 or a case that an obstacle is positioned in the second path 220b.

FIGS. 3A to 3C illustrate examples of an RIS (e.g., an RIS 140). An RIS 140 may include a plurality of unit cells (or may be referred to as a plurality of cells).

Referring to FIG. 3A, a unit cell 310 may include a conductive member. A signal may be transmitted to the conductive member through a signal line 320 or the signal may be received from the conductive member. The conductive member may include a dipole. For example, the unit cell 310 may include a plurality of dipoles (e.g., two dipoles). As an example, the unit cell 310 may include a first dipole 311 and a second dipole 332. Different resonant frequencies may provide broadband. As sizes of the dipoles are different, resonant frequencies at each dipole may be different. The unit cell 310 may include dipoles having different sizes for a broadband operation. According to an embodiment, the plurality of dipoles of the unit cell 310 may have different lengths. For example, a length of the first dipole 331 (e.g., in a z-axis direction) may be different from a length of the second dipole 332. The length of the first dipole 331 may be shorter than the length of the second dipole 332. According to an embodiment, the plurality of dipoles of the unit cell 310 may have different widths. For example, a width of the first dipole 331 (e.g., in an x-axis direction) may be different from a width of the second dipole 332. The width of the first dipole 331 may be shorter than the width of the second dipole 332. Although not illustrated in FIG. 3A, for broadband, intervals between the plurality of dipoles of the unit cell 310 may be different from each other. Different lengths or different intervals cause resonant frequencies at each dipole to be different. Formation of different resonant frequencies within an adjacent range may widen a frequency range that provides a gain equal to or greater than a certain decibel. The widened frequency range means broadband.

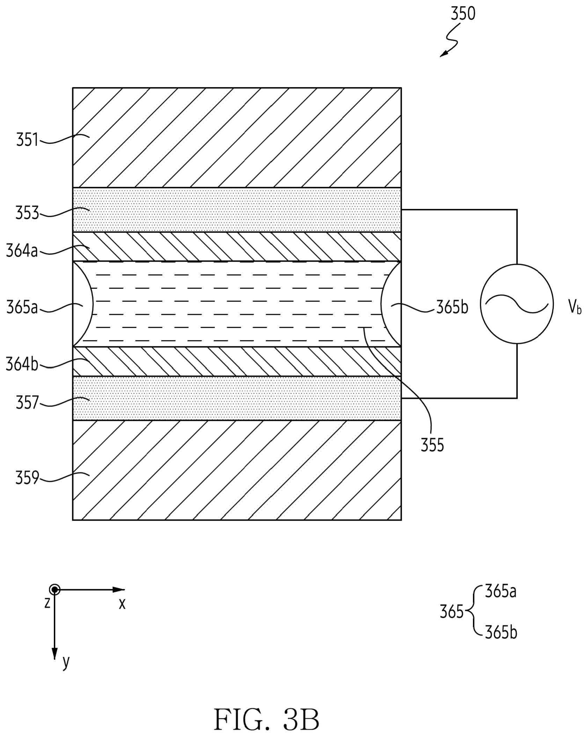

The unit cell 310 may include a liquid crystal portion 340. The liquid crystal portion 340 may be used to change a magnitude component and a phase component of a fed signal or a received signal. The liquid crystal portion 340 may be used to change a magnitude component of a fed signal or a received signal. The liquid crystal portion 340 may be used to change a phase component of a fed signal or a received signal. Based on a dielectric constant of the liquid crystal portion 340, a signal in the liquid crystal portion 340 may be refracted. For example, a control device 150 may apply a DC voltage to a biasing line. A processor 340 may individually control a bias in a unit cell ground through a via. As the bias varies, a voltage applied to a unit cell varies. The liquid crystal portion 340 may include a liquid crystal having dielectric anisotropy. The dielectric constant of the liquid crystal portion 340 depends on the applied voltage. For example, a control device 101 may control the dielectric constant of the liquid crystal portion 340 by applying an AC voltage in addition to the DC voltage or may control the dielectric constant of the liquid crystal portion 340 through a quasi-static electric field. The varying dielectric constant may change an electrical characteristic of a signal passing through the unit cell. A stacked structure including the liquid crystal portion 340 is described in detail through FIG. 3B.

Although FIG. 3A illustrates two dipoles as a conductive member, embodiments of the present disclosure are not limited thereto. For example, the unit cell 310 may include three or more dipoles or one dipole. For example, the conductive member may also include a patch shape other than a dipole.

Referring to FIG. 3B, a cross-sectional view 350 indicates a stacked structure of the unit cell 310. The unit cell 310 may include a structure stacked in an order of a crystal (e.g., quartz) layer 351, a first metal layer 353, a liquid crystal layer 355, a second metal layer 367, and a crystal layer 359. The first metal layer 353 may include the signal line 320, the first dipole 331, and the second dipole 332 of FIG. 3A. The liquid crystal layer 355 may include the liquid crystal portion 340 of FIG. 3A. The liquid crystal layer 355 may be disposed between the first metal layer 353 and the second metal layer 357. For the liquid crystal layer 355, polyamides 364a and 364b may be disposed on an upper surface (e.g., a surface disposed above the liquid crystal layer 355 based on a (+)z-axis) and a lower surface (e.g., a surface disposed below the liquid crystal layer 355 based on a (-)z-axis) of the liquid crystal layer 355, respectively. The polyamide 364a may be disposed between the first metal layer 353 and the liquid crystal layer 355. The polyamide 364b may be disposed between the liquid crystal layer 355 and the second metal layer 357. The liquid crystal layer 355 may include a liquid crystal having dielectric anisotropy. In order to fix a fluid liquid crystal of the liquid crystal layer 355, a spacer 365 (e.g., a first spacer 365a and/or a second spacer 365b) may be disposed. The spacer 365 may be disposed between the polyamide 364a coupled to the first metal layer 353 and a polyamide 354b coupled to the second metal layer 357.

Although not illustrated in FIG. 3B, it may be electrically connected from a PCB to the second metal layer 357 in order to transmit a fed signal or a signal received from the outside. An RIS controller (e.g., the control device 150) may apply a voltage to the unit cell 310. For example, a voltage (e.g., $V_b$) may be applied between the first metal layer 353 and the second metal layer 357. A dielectric constant of the liquid crystal layer 355 disposed between the first metal layer 353 and the third metal layer 357 depends on the applied voltage. The dielectric constant may vary according to the applied voltage. The varying dielectric constant may change an electrical characteristic of a signal passing through the unit cell 310.

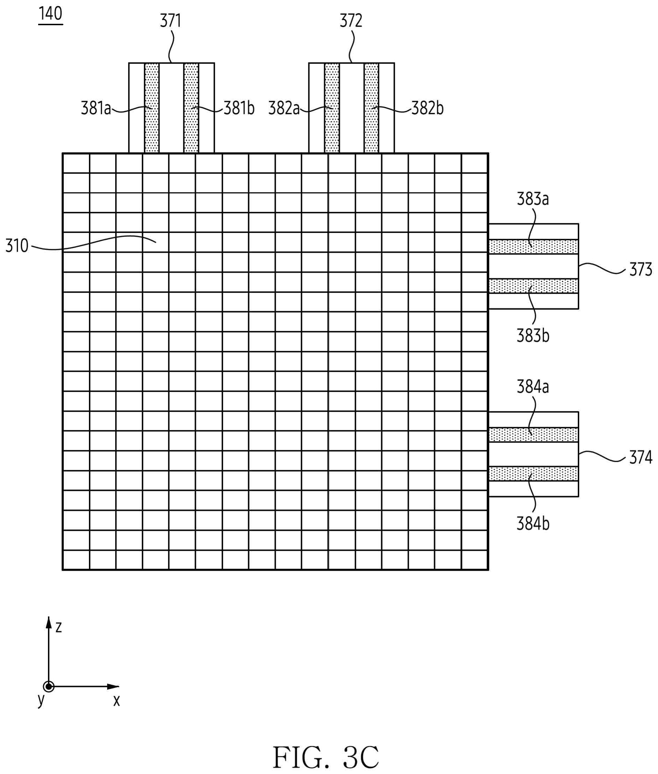

Referring to FIG. 3C, the RIS 140 may include a plurality of unit cells (e.g., the unit cell 310). The plurality of unit cells may be divided into a plurality of channels. For example, the plurality of unit cells of the RIS 140 may be divided into 40 channels. A channel may include one or more unit cells. A voltage may be applied to a unit cell of each channel according to a signal supplied from the RIS controller (e.g., the control device 150). Biasing lines for supplying a signal to the plurality of unit cells may be connected to apply a voltage. For example, a plurality of flexible printed circuit boards (FPCBs) may be connected to the RIS 140. The plurality of FPCBs may include a first FPCB 371, a second FPCB 372, a third FPCB 373, and a fourth FPCB 374. Each FPCB may include signal lines for channels. For example, each FPCB may include signal lines for 10 channels. As an example, the first FPCB 371 may include a signal line 381a and a signal line 381b. The second FPCB 372 may include a signal line 382a and a signal line 382b. The third FPCB 373 may include a signal line 383a and a signal line 383b. The fourth FPCB 374 may include a signal line 384a and a signal line 384b. A voltage may be applied between two metal layers of a corresponding unit cell through the signal line. The control device 150 may individually control a voltage applied to a unit cell of the RIS 140. As an example, voltage magnitude applied between unit cells may vary. A dielectric constant of a liquid crystal layer in each of unit cells may vary from each other.

On the other hand, in FIGS. 3A to 3C, three dipole elements are illustrated in the unit cell 310, but embodiments of the present disclosure are not limited thereto. According to an embodiment, more than three antennas (e.g., four and five) or fewer than three antennas (e.g., two) may be disposed in a unit cell. In addition, a type of an antenna disposed in the unit cell is a dipole, but embodiments of the present disclosure are not limited thereto. According to another embodiment, a unit cell structure having a liquid crystal layer may include not only a dipole element but also a radiation layer using at least one of a patch antenna, a microstrip antenna, a horn antenna, or a slot antenna for receiving a signal.

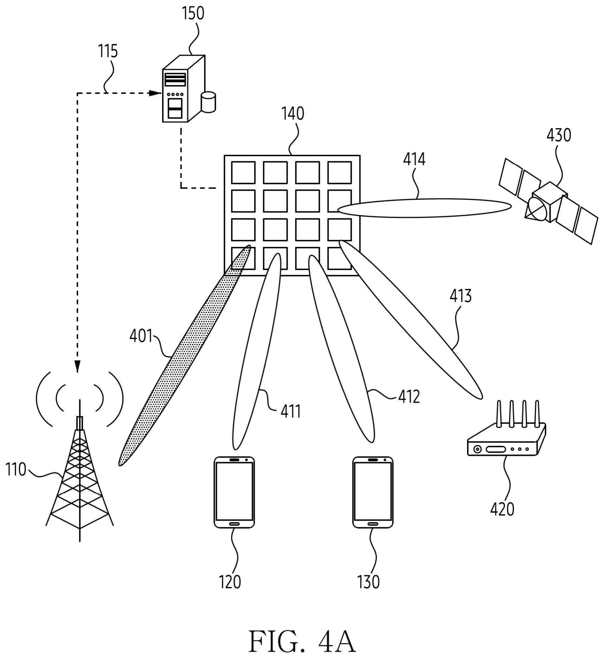

FIG. 4A illustrates an example of an operation of a beamforming codebook of an RIS (e.g., an RIS 140). The RIS 140 indicates a network node configured with an arrangement of elements called a unit cell that may dynamically control a property to change an electromagnetic operation. A response of the RIS 140 may be dynamically and/or semi-static controlled through a control signal (e.g., a control device 150) such as adjusting incident signals through reflection, refraction, focusing, collimation, modulation, absorption, or a combination thereof. RIS beamforming may be implemented by adjusting a reflect angle of an element (e.g., a unit cell). In order to control the response of the RIS 140, the RIS 140 may use a beamforming codebook, which is a set of codewords for collectively managing unit cells.

Referring to FIG. 4A, the control device 150 connected to the RIS 140 may provide an RIS configuration for the RIS 140. The control device 150 may transmit a control signal to the RIS 140 to indicate the RIS configuration for the RIS 140. The RIS configuration may include at least one codeword of a beamforming codebook and/or a beamforming codebook to be operated in the RIS 140. Each codeword of the beamforming codebook may indicate a phase pattern to be applied in the RIS 140. The phase pattern may indicate a phase shift value to be applied to each unit cell of a plurality of unit cells of the RIS 140. According to the RIS configuration provided by the control device 150, a channel quality for a downlink (DL)/an uplink (UL)/a sidelink (SL) within a designated region may be improved. According to the RIS configuration, the unit cell of the RIS 140 may be configured to adjust a property of reflection signals in terms of phase, amplitude, polarization, and the like.

A base station 110 may transmit signals to the RIS 140. The signals may be referred to as incident signals 401 to the RIS 140. The RIS 140 may change a phase of the incident signals 401 according to the RIS configuration configured in the RIS 140. For example, each unit cell may change a phase value of an obtained incident signal. According to the RIS configuration, at least one unit cell among the plurality of unit cells may be activated. A signal having a changed phase value may be reflected through at least one activated unit cell of the RIS 140. The RIS 140 may adjust phase components of the incident signals 401 according to the RIS configuration. The RIS 140 may control a beam direction of reflected signals (hereinafter, reflection signals) by adjusting the phase components. Through the RIS configuration, the incident signals 401 of the RIS 140 may be reflected toward an intended receiver. In this way, the control of the beam direction for the signals reflected through the RIS 140 may be referred to as RIS beamforming. For example, the RIS configuration may be configured to a first codeword. The RIS 140 may change a phase of the incident signals 401 according to a phase pattern corresponding to the first codeword. The RIS 140 may reflect the incident signals 401. The RIS 140 may output first reflection signals 411 according to the first codeword. The RIS 140 may transmit the first reflection signals 411 to a terminal 120. For example, the RIS configuration may be configured to a second codeword. The RIS 140 may change a phase of the incident signals 401 according to a phase pattern corresponding to the second codeword. The RIS 140 may reflect the incident signals 401. The RIS 140 may output second reflection signals 412 according to the second codeword. The RIS 140 may transmit the second reflection signals 412 to a terminal 130. For example, the RIS configuration may be configured to a third codeword. The RIS 140 may change a phase of the incident signals 401 according to a phase pattern corresponding to the third codeword. The RIS 140 may reflect the incident signals 401. The RIS 140 may output third reflection signals 413 according to the third codeword. The RIS 140 may transmit the third reflection signals 413 to a customer premises equipment (CPE) 420. For example, the RIS configuration may be configured to a fourth codeword. The RIS 140 may change a phase of the incident signals 401 according to a phase pattern corresponding to the fourth codeword. The RIS 140 may reflect the incident signals 401. The RIS 140 may output fourth reflection signals 414 according to the fourth codeword. The RIS 140 may transmit the fourth reflection signals 414 to a satellite 430.

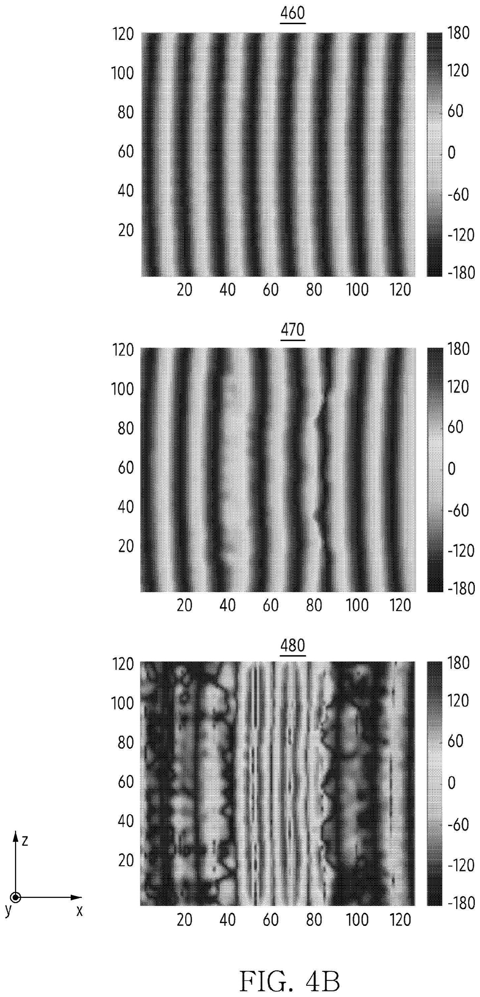

FIG. 4B illustrates an example of a change in a phase distribution due to an obstacle. The phase distribution indicates a phase distribution of a meta surface (e.g., an xz plane) of an RIS (e.g., an RIS 140).

Referring to FIG. 4B, a first phase distribution 460 indicates a distribution of phase values of the RIS 140 when signals of a base station 110 are incident on the RIS 140 in a communication environment (e.g., a communication environment 100) without an obstacle. A second phase distribution 470 indicates a distribution of phase values of the RIS 140 when the signals of the base station 110 are incident on the RIS 140 in an environment (e.g., a communication environment 200) with an obstacle (e.g., an obstacle 252). A third phase distribution 480 indicates a difference between the first phase distribution 460 and the second phase distribution 480.

The RIS 140 may use a codebook for beamforming to reflect the incident signals at a desired angle. Each codeword of the codebook may indicate a phase pattern of a plurality of unit cells of the RIS 140. For example, the codebook used by the RIS 140 may be configured assuming an LOS path without an obstacle 252 in the first path 220a between the base station 110 and the RIS 140. The codebook may be configured based on a first phase distribution 560.

Accordingly, in a communication environment (e.g., the communication environment 200) in which the obstacle 252 is positioned on the first path 220a, when a codebook learned by assuming a communication environment (e.g., the communication environment 100) without the obstacle 252 is used, phase distortion may occur, as in the third phase distribution 480. In other words, since the RIS 140 does not receive incident signals having an intended magnitude and phase, it may not transmit reflection signals having an intended magnitude and/or phase. For example, the RIS 140 may change a phase of incident signals according to a phase pattern corresponding to a codeword configured in the RIS 140. However, the RIS 140 may obtain signals having a phase distribution (e.g., the second phase distribution 470) different from an expected phase distribution (e.g., the first phase distribution 460) for the incident signals. Accordingly, even if a phase of the incident signals is changed according to the phase pattern, the RIS 140 is difficult to output reflection signals in a desired direction. This is because phase distortion has occurred as in the third phase distribution 480. In order to alleviate performance degradation due to the phase distortion, the control device 150 according to embodiments of the present invention may obtain phase distortion information and change a phase pattern configured in the RIS 140 based on the phase distortion information.

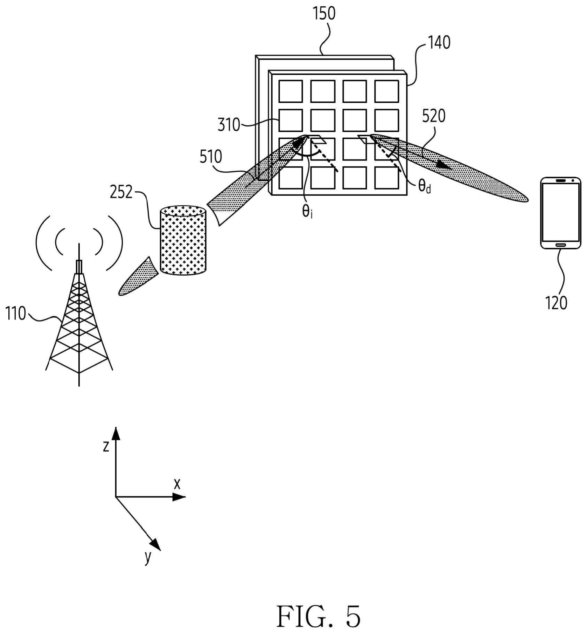

FIG. 5 illustrates incident signals and reflection signals of an RIS (e.g., an RIS 140). For description of the RIS 140 and an RIS controller (e.g., a control device 150), descriptions of FIGS. 2 to 4B may be referred to.

Referring to FIG. 5, the RIS 140 may obtain incident signals 510. The RIS 140 may reflect the incident signals 510 based on beamforming control information according to an RIS configuration. The beamforming control information according to the RIS configuration may be used for a phase shift of incident signals. The reflected incident signals 510 may be referred to as reflection signals 520. The RIS 140 may radiate the reflection signals 520. The beamforming control information may indicate a configuration for changing beamforming parameters of incident signals. For example, the beamforming control information may indicate a phase pattern for a plurality of unit cells. The phase pattern may indicate a difference between a phase value of a signal incident on each unit cell and a phase value of a reflected signal. The phase pattern may indicate a phase shift value in each unit cell. The phase shift values of the unit cells may be referred to as a phase pattern. In addition, for example, the beamforming control information may indicate whether each unit cell is activated. The beamforming control information does not perform a phase shift in all unit cells of the RIS 140, but may selectively change a phase value for at least one unit cell among the unit cells.

For example, a function of the RIS 140 according to the beamforming control information may be represented by the following equation.

[Equation 1]

$$Y = RIS(X)$$

The X indicates the incident signals 510, and the Y indicates the reflection signals 520. The RIS() may include a phase control operation according to the RIS 140. For example, the RIS 140 may include unit cells arranged in two dimensions of an M X N. The M indicates the number of unit cells in an X-axis direction, and the N indicates the number of unit cells in a Z-axis direction. The X may include a complex vector (or matrix) of an MN x 1 size. The Y may include a complex vector (or matrix) of an MN x 1 size. An element of each vector may correspond to a unit cell.

In the example, the phase control operation of the RIS 140 represented as the RIS() may operate according to a phase pattern of a codebook for RIS beamforming. Phase transition values configured according to the phase pattern indicated by a codeword of the codebook may be understood as the RIS(). However, if the codebook is learned based on an environment (e.g., a communication environment 100) without an obstacle, the codebook configured in the RIS 140 does not reflect phase distortion due to the obstacle. In order to reflect an influence of the obstacle (e.g., an obstacle 252), phase distortion information may be used. The phase distortion information may indicate phase changes changed due to the obstacle.

The equation may be modified as follows.

[Equation 2]

$$Y = RIS(Phase\_disortion(X)) = Blockage(X)$$

The X indicates the incident signals 510, and the Y indicates the reflection signals 520. The RIS() may include a previously configured phase control operation. The RIS() indicates a phase control operation previously configured in the RIS 140. The Phase_distortion() indicates phase distortion due to an obstacle. According to an embodiment, the control device 150 may learn a relationship between the obstacle 252 and phase distortion information (e.g., the Phase_distortion()) through machine learning. For example, characteristic information (e.g., information related to a position of the obstacle 252, information related to formation of the obstacle 252, information related to a size of the obstacle 252, or information related to a type of the obstacle 252) of the obstacle 252 may be used as an input, and the phase distortion information may be used as an output. The phase distortion information may indicate phase changes in each unit cell due to an obstacle. The Blockage() may include a beamforming control operation in which phase distortion due to an obstacle is reflected. The Blockage() may depend on a characteristic (e.g., a position, a size, or a shape) of an obstacle. For convenience of description, in Equation 2, the Blockage() is represented in a form of a composite function of the RIS() and the Blockage(), but Equation 2 is merely a mathematical description for representing an influence due to an obstacle, and the Equation 2 is not interpreted as limiting embodiments of the present disclosure.

For example, if the incident signals 510 are received, the RIS 140 may transmit the reflection signals 520 in an environment (e.g., the communication environment 100) without an obstacle.

[Equation 3]

$$B = RIS(A)$$

The A indicates the incident signals 510, and the B indicates the reflection signals 520.

A beamforming direction intended to provide a communication service to a terminal 120 may be confirmed through a beam pattern of the reflection signals 520. However, if phase distortion occurs due to an obstacle, the incident signals 510 may not be normally provided to the RIS 140. If the phase distortion is not compensated, a phase component of the reflection signals is also different, so a beam direction of the reflection signals may be different.

[Equation 4]

$$B' = RIS(A')$$

The A' indicates distorted incident signals, and the B' indicates distorted reflection signals.

The beamforming direction intended to provide the communication service to the terminal 120 may be in association with a vector B other than a vector B'. In order to reduce an influence (e.g., phase distortion) due to an obstacle, the control device 150 may configure beamforming control information such that signals having the vector B are reflected. For example, the function Blockage() indicating the beamforming control information may be represented as Equation 5 or Equation 6 below.

[Equation 5]

$$B = Blockage(A')$$

[Equation 6]

$$\underset{Blockage()}{\text{argmin}} |B - Blockage(A')|$$

The A' indicates distorted incident signals, and the B indicates the reflection signals 520 in an intended direction. The Blockage() corresponding to the beamforming control information may depend on a characteristic (e.g., a position, a size, a shape, or a type) of an obstacle. According to an embodiment, the control device 150 may learn a relationship between the obstacle 252 and beamforming control information (e.g., the Blockage()) through machine learning. For example, the characteristic information (e.g., information related to the position of the obstacle 252, information related to formation of the obstacle 252, information related to the size of the obstacle 252, or information related to the type of the obstacle 252) of the obstacle 252 may be used as an input, and the beamforming control information may be used as an output. The beamforming control information may indicate a phase transition value of each unit cell to be applied in the RIS 140. According to an embodiment, the control device 150 may modify a beamforming pattern to minimize distortion due to the obstacle 252.

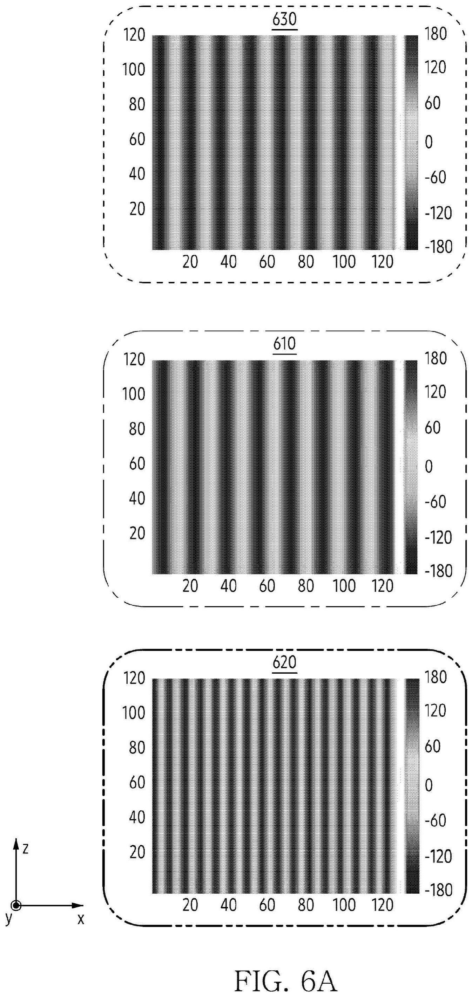

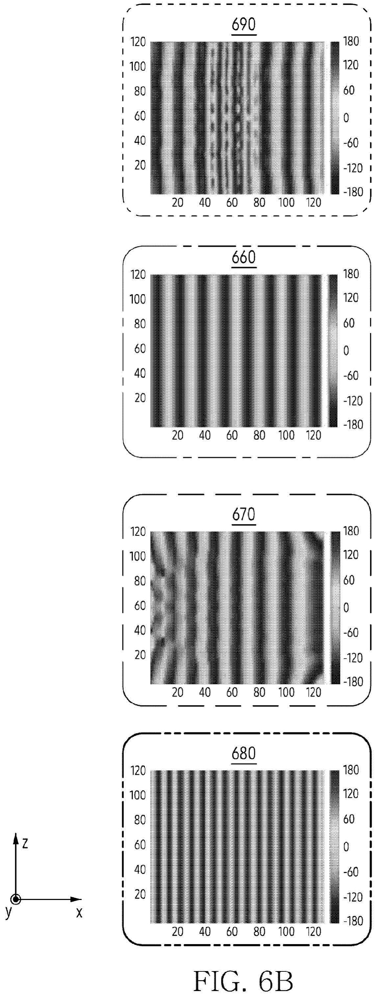

FIGS. 6A and 6B illustrate examples of a phase pattern for beamforming.

Referring to FIG. 6A, phase distributions in a communication environment (e.g., a communication environment 100) without an obstacle 252 are illustrated. A first phase distribution 610 indicates a phase pattern of incident signals. A second phase distribution 620 indicates a phase pattern of reflection signals. The phase pattern of the reflection signals may indicate a beamforming direction desired to be obtained through an RIS 140. A phase pattern in the RIS 140 may be determined through a difference between the phase pattern of the incident signals and the phase pattern of the reflection signals. For example, the phase pattern in the RIS 140 may be represented as a third phase distribution 630. As an example, the difference between the phase pattern of the incident signals and the phase pattern of the reflection signals may correspond to a result according to the RIS() function of Equation 1.

Referring to FIG. 6B, phase distributions in a communication environment (e.g., a communication environment 200) with the obstacle 252 are illustrated. A first phase distribution 660 indicates a phase pattern of incident signals. A second phase distribution 670 indicates phase changes scattered due to the obstacle 252. A third phase distribution 680 indicates a phase pattern of reflection signals. The phase pattern of the reflection signals may indicate a beamforming direction desired to be obtained through the RIS 140. In order to obtain intended incident signals from signals actually incident through the RIS 140, the first phase distribution 660 and the second phase distribution 670 may be added. Based on the phase pattern of the incident signals and the phase changes scattered due to the obstacle 252, phase distortion may be compensated. By adding the first phase distribution 660 and the second phase distribution 670, the RIS 140 may reduce an influence due to the obstacle 252. A phase pattern of a compensated incident signals may be obtained according to a sum of the first phase distribution 660 and the second phase distribution 670. A phase pattern in the RIS 140 may be determined through a difference between the phase pattern of the compensated incident signals and the phase pattern of the reflection signals. For example, the phase pattern in the RIS 140 may be represented as a fourth phase distribution 690. As an example, the second phase distribution 670 may correspond to a result of the Blockage() function of Equation 5 or Equation 6, as phase distortion information.

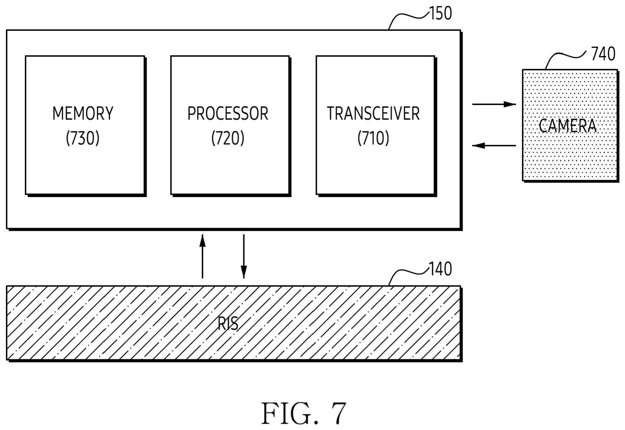

FIG. 7 illustrates an example of components of a control device (e.g., a control device 150) for an RIS (e.g., an RIS 140).

Referring to FIG. 7, the control device 150 may include a transceiver 710, a processor 720, and memory 730, as the components.

The transceiver 710 may perform functions for transmitting and receiving a signal in a wired communication environment. The transceiver 710 may include a wired interface for controlling a direct connection between a device and a device through a transmission medium (e.g., a copper wire or an optical fiber). For example, the transceiver 710 may transmit an electrical signal to another device through the copper wire or perform conversion between an electrical signal and an optical signal. For example, the transceiver 710 may transmit a control signal (e.g., an RIS configuration, a phase pattern, a codebook, or a codeword) to the RIS 140, or receive data (e.g., phase/reception signal data) from the RIS 140. For example, the transceiver 710 may perform communication with an external node (e.g., a base station 110).

The transceiver 710 performs functions for transmitting and receiving a signal through a wireless channel. For example, the transceiver 710 performs a conversion function between a base band signal and a bit stream according to a physical layer specification of a system. For example, when transmitting data, the transceiver 710 generates complex symbols by encoding and modulating a transmission bit stream. In addition, when receiving data, the transceiver 710 restores a reception bit stream through demodulation and decoding of a base band signal. In addition, the transceiver 710 up-converts a base band signal into an radio frequency (RF) band signal and then transmits it through an antenna, and down-converts the RF band signal received through the antenna into a base band signal. To this end, the transceiver 710 may include a transmission filter, a reception filter, an amplifier, a mixer, an oscillator, a digital to analog converter (DAC), an analog to digital converter (ADC), and the like.

As described above, the transceiver 710 transmits and receives a signal. Accordingly, the transceiver 710 may be referred to as a 'transmission unit', a 'reception unit', or a 'transmission/reception unit'. In addition, in the following description, transmission and reception performed through a wireless channel, a backhaul network, an optical cable, Ethernet, and other wired paths are used to mean including that the processing as described above is performed by the transceiver 710.

The processor 720 controls overall operations of the control device 150. For example, the processor 720 writes and reads data to and from the memory 730. For example, the processor 720 transmits and receives a signal through the transceiver 710. Although one processor is illustrated in FIG. 7, embodiments of the present invention are not limited thereto. The control device 150 may include at least one processor to perform embodiments of the present disclosure. The processor 720 may be referred to as a control unit or a control means. According to embodiments, the processor 720 may control a device to perform operations of the control device 150 according to embodiments of the present disclosure. According to an embodiment, the control device 150 may select an RIS configuration for the RIS 140 and provide it to the RIS 140. The control device 150 may control a voltage applied to each unit cell of the RIS 140. The control device 150 may change a frequency response characteristic of each unit cell of the RIS 140 by adjusting a voltage applied to a liquid crystal layer (e.g., a liquid crystal layer 355) of the RIS 140.

The memory 730 may store data such as a basic program, an application program, configuration information, and the like for an operation of the control device 150. The memory 730 may be configured with a volatile memory, a nonvolatile memory, or a combination of the volatile memory and the nonvolatile memory. In addition, the memory 730 may provide the stored data according to a request of the processor 720.

The control device 150 may control the RIS 140 according to a command of the at least one processor (e.g., the processor 720). According to an embodiment, the RIS 140 and the control device 150 may be implemented as an entity. In FIG. 7, the control device 150 and the RIS 140 are illustrated and described as separate entities, but embodiments of the present disclosure are not limited thereto. For example, the RIS 140 may be implemented in a form of a device coupled to the control device 150. On a network, the base station 110 may recognize the RIS 140 and the control device 150 as a node. Passive elements of a meta surface of the RIS 140 may be dynamically managed through a control interface with the control device 150. According to another embodiment, the RIS 140 and the control device 150 may be implemented to be divided into separate entities. The RIS 140 may be disposed in an entity different from components (e.g., the transceiver 710, the processor 720, and the memory 730) for signal processing to receive or transmit signals transmitted through a wireless channel.

The control device 150 may control a camera 740 according to a command of the at least one processor (e.g., the processor 720). The camera 740 may capture a still image and a video. For example, the camera 740 may include one or more lenses, image sensors, image signal processors, or flashes. The camera 740 may obtain image information for an external region. The image information may include one or more images and/or one or more videos. For example, the camera 740 may obtain image information for at least a portion of a wireless communication environment between the RIS 140 and the base station 110. For example, the camera 740 may obtain image information for an obstacle (e.g., an obstacle 252). For example, the camera 740 may obtain image information for at least a portion of a wireless communication environment between the RIS 140 and a terminal 120. According to an embodiment, the camera 740 and the control device 150 may be implemented as an entity. For example, the control device 150 may include at least one camera (e.g., the camera 740). In FIG. 7, the control device 150 and the camera 740 are illustrated and described as separate entities, but embodiments of the present disclosure are not limited thereto. For example, the camera 740 may be implemented in a form of a device coupled to the control device 150. According to another embodiment, the camera 740 and the control device 150 may be implemented to be divided into separate entities. The camera 740 may be disposed in an entity different from components (e.g., the transceiver 710, the processor 720, and the memory 730) for signal processing to recognize external objects (e.g., an obstacle) on a communication path and obtain image information for the recognized target.

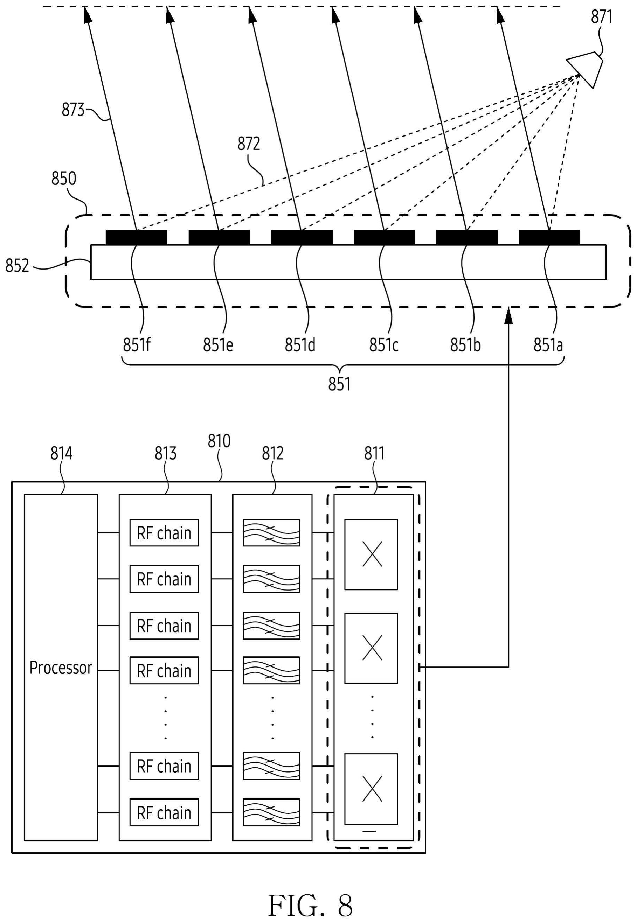

FIG. 8 illustrates an example of components of a base station (e.g., a base station 110) including a reflected array antenna. The functions of the RIS 140 and the operations of the control device 150 described through FIGS. 2 to 7 may also be applied to the reflected array antenna in which a distance between the base station 110 and a reflective surface is relatively close.

Referring to FIG. 8, the base station 110 may include an antenna unit 811, a power interface unit 812, a radio frequency (RF) processing unit 813, and a control unit 814.

The antenna unit 811 may include a plurality of antennas. The antenna unit 811 may include an antenna module. An antenna of the antenna module performs functions for transmitting and receiving a signal through a wireless channel. The antenna may include a conductor formed on a substrate (e.g., a PCB or a PFCB) or a radiator formed of a conductive pattern. The antenna may radiate a up-converted signal on a wireless channel or obtain a signal radiated from another device. Each antenna may be referred to as an antenna element or an antenna device. In embodiments, the antenna unit 811 may include an antenna array in which a plurality of antenna elements form an array. The antenna unit 811 may be electrically connected to the power interface unit 812 through RF signal lines. The antenna unit 811 may provide a received signal to the power interface unit 812, or may radiate a signal provided from the power interface unit 812 into the air. According to an embodiment, the antenna unit 811 may include a reflected array antenna 850. The antenna unit 811 may radiate the provided signals through reflectors. Signals reflected through the radiators may be radiated into the air.

The power interface unit 812 may include a module and components. The power interface unit 812 may include one or more IFs. The power interface unit 812 may include one or more LOs. The power interface unit 812 may include one or more LDOs. The power interface unit 812 may include one or more DC/DC converters. The power interface unit 812 may include one or more DFEs. The power interface unit 812 may include one or more FPGAs. The power interface unit 812 may include one or more connectors. The power interface unit 812 may include a power supply. According to an embodiment, the power interface unit 812 may include a filter. The filter may perform filtering to transmit a signal of a desired frequency. The power interface unit 812 may include the filter. The filter may perform a function for selectively identifying a frequency by forming a resonance. The power interface unit 812 may include at least one of a band pass filter, a low pass filter, a high pass filter, or a band reject filter. That is, the power interface unit 812 may include RF circuitry for obtaining a signal of a frequency band for transmission or a frequency band for reception. The power interface unit 812 according to various embodiments may electrically connect the antenna unit 811 and the RF processing unit 813.

The RF processing unit 813 may include a plurality of RF processing chains. The RF chain may include a plurality of RF elements. The RF elements may include an amplifier, a mixer, an oscillator, a DAC, an ADC, and the like. According to an embodiment, the RF processing chain may be implemented as an RFIC. For example, the RF processing unit 813 may include an up converter that up-converts a digital transmission signal of a base band into a transmission frequency, and a digital-to-analog converter (DAC) that converts the up-converted digital transmission signal into an analog RF transmission signal. The up converter and the DAC form a portion of a transmission path. The transmission path may further include a power amplifier (PA) or a coupler (or a combiner). In addition, for example, the RF processing unit 813 may include an analog-to-digital converter (ADC) that converts an analog RF reception signal into a digital reception signal and a down converter that converts the digital reception signal into a digital reception signal of a base band. The ADC and the down converter form a portion of a reception path. The reception path may further include a low-noise amplifier (LNA) or a coupler (or a divider). RF components of an RF processing unit may be implemented on a PCB. The base station 110 may include a structure stacked in an order of the antenna unit 811, the power interface unit 812, and the RF processing unit 813.

The control unit 814 may control overall operations of the base station 110. The control unit 814 may include various modules for performing communication. The control unit 814 may include at least one processor such as a modem. The control unit 814 may include modules for digital signal processing. For example, the control unit 814 may include a modem. When transmitting data, the control unit 814 generates complex symbols by encoding and modulating a transmission bit stream. In addition, for example, when receiving data, the control unit 814 restores a reception bit stream through demodulation and decoding of a base band signal. The control unit 814 may perform functions of a protocol stack required by a communication standard.

According to an embodiment, the antenna unit 811 may include the reflected array antenna 850. The reflected array antenna 850 may include a plurality of reflectors 851. For example, the plurality of reflectors 851 may include a first reflector 851a, a second reflector 851b, a third reflector 851c, a fourth reflector 851d, a fifth reflector 851e, and a sixth reflector 851f. Each reflector may reflect signals from a feeding point 871. Each reflector may be formed of a material for reflecting a wireless signal. For example, each reflector may be formed of a metal, such as a patch, or glass. The plurality of reflectors 851 may be disposed on a ground substrate 852. The signals from the feeding point 871 may be incident on the plurality of reflectors 851. The signals may be referred to as incident signals 872. The incident signals 872 may generate reflection signals 873 by being reflected from the plurality of reflectors 851. The incident signals 872 may be converted into the reflection signals 873 having a changed phase according to a phase shift value of each reflector.

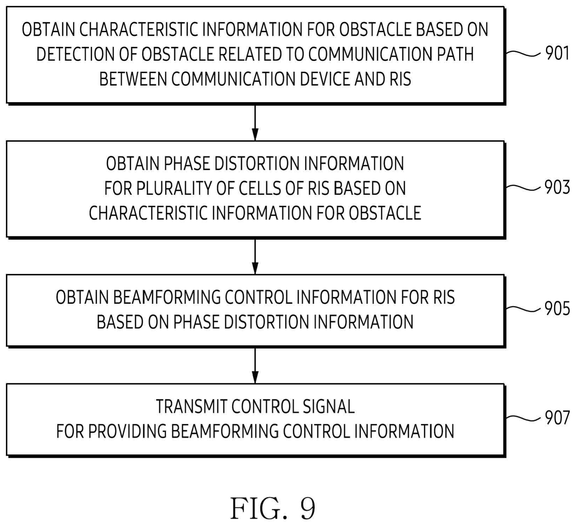

FIG. 9 illustrates an operation flow of a control device (e.g., a control device 150) for compensating for phase distortion of an RIS (e.g., an RIS 140).

Referring to FIG. 9, in operation 901, the control device 150 may obtain characteristic information for an obstacle based on detection of the obstacle related to a communication path between a communication device and the RIS 140. For example, the communication device may be a base station 110. For example, the communication device may be a terminal 120. The control device 150 may detect an obstacle. The obstacle may be an object that interferes with communication on the communication path between the communication device and the RIS 140. For example, the obstacle may be an external object such as a building, a construction, or a tree.

The control device 150 may detect an obstacle through at least one camera (e.g., a camera 740). The control device 150 may obtain image information through the at least one camera. Based on the image information, the control device 150 may detect an obstacle. The at least one camera may obtain the image information through capturing of a region between the RIS 140 and the base station 110. The image information may be provided to the control device 150. For example, the control device 150 may obtain periodically captured image information. The control device 150 may recognize that an obstacle is positioned based on obtained images. For another example, in response to an event occurrence (e.g., a channel quality lower than a threshold), the control device 150 may identify, through the at least one camera, whether an obstacle is positioned.

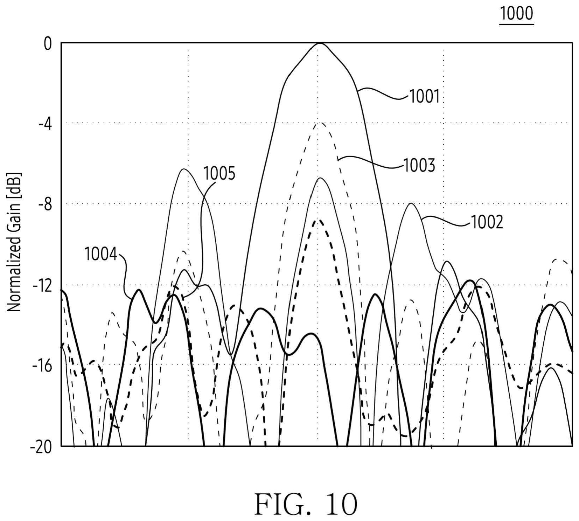

The control device 150 may obtain characteristic information for the detected obstacle. The control device 150 may obtain characteristic information for the obstacle in order to analyze an influence of the obstacle on the RIS 140. The characteristic information may be referred to as property information, feature information, object information, shape information, or a term having an equivalent technical meaning thereto. For example, the characteristic information may include information related to a position of the obstacle. According to the position of the obstacle, an intensity and/or phases of signals incident on the RIS 140 may vary. As the obstacle is closer to the RIS 140, the signals incident on the RIS 140 may be more scattered. For example, the characteristic information may include information related to a shape of the obstacle. According to whether the obstacle is a rectangular pillar shape, a cylinder shape, or a sculpture having a separate designated shape, a characteristic of scattered, diffracted, and reflected signals may vary. For example, the characteristic information may include information related to a size of the obstacle. As described through FIGS. 10 to 13 to be described later, as the size of the obstacle becomes larger, a gain of signals received by the RIS 140 or a gain of a signal reaching a receiving end (e.g., the terminal 120) may vary. The control device 150 may obtain information related to the size of the obstacle in order to alleviate phase distortion due to the obstacle. For example, the characteristic information may include information related to a type of the obstacle. According to whether the obstacle is a building, a tree, or an external sculpture, a characteristic of scattered, diffracted, and reflected signals may vary.

In operation 903, the control device 150 may obtain phase distortion information for a plurality of cells of the RIS 140 based on the characteristic information for the obstacle. The control device 150 may obtain phase distortion information through a difference between a phase pattern of the RIS 140 in a communication environment with the obstacle and a phase pattern of the RIS 140 in a communication environment without the obstacle. The phase distortion information indicates an amount of change in a phase pattern due to the obstacle. The phase distortion information may be referred to as distortion of a phase distribution, a distortion pattern, a distortion distribution, or a term having an equivalent technical meaning thereto. The control device 150 may obtain an amount of change in the phase pattern of the RIS 140 due to the obstacle based on the characteristic information for the obstacle. For example, the control device 150 may obtain an amount of change in the phase pattern of the RIS 140 due to an obstacle based on a position, a size, a shape, a material, and/or a type of the obstacle.

According to a non-limiting embodiment, the control device 150 may obtain an amount of change in the phase pattern of the RIS 140 due to the obstacle through a predetermined table. The predetermined table may store phase changes according to a level of each item (e.g., a position, a size, a type, a material, or a shape) of the characteristic information for the obstacle. The control device 150 may obtain phase changes to be changed in each unit cell according to the predetermined table.

According to a non-limiting embodiment, the control device 150 may obtain an amount of change in the phase pattern of the RIS 140 due to the obstacle through machine learning. For example, learning with the characteristic information for the obstacle as an input and the amount of change in the phase pattern as an output may be performed. A position of the obstacle, a size of the obstacle, a shape of the obstacle, a material of the obstacle, and/or a type of the obstacle may be classified as input data for data collection. A degree to which a phase distribution of unit cells of the RIS 140 varies with respect to each obstacle may be classified as output data for data. Based on learning according to the input data and the output data, distortion information for the phase pattern of the RIS 140 according to a characteristic of an obstacle may be obtained. The control device 150 may obtain phase distortion information through its own calculation inside the control device 150 or a result according to a calculation of an external entity (e.g., a network controller). Based on a result of the learning, the control device 150 may obtain phase distortion information for an obstacle having a specific type of characteristic information.

In operation 905, the control device 150 may obtain beamforming control information for the RIS based on the phase distortion information. The beamforming control information may indicate a phase pattern for a plurality of unit cells. The beamforming control information may be at least a portion of an RIS configuration for controlling the RIS 140 by the control device 150. The RIS 140 may reflect incident signals 510 based on the beamforming control information according to the RIS configuration. The beamforming control information may be at least a portion of the RIS configuration. For example, the beamforming control information may include a codebook for RIS beamforming. A plurality of codewords may be configured in a form of the codebook in the RIS 140. The control device 150 may entirely compensate for phase patterns of the plurality of codewords. The control device 150 may change all of the phase patterns indicated by the codebook based on the phase distortion information. The control device 150 may transmit the beamforming control information including the codebook indicating the changed phase patterns to the RIS 140. For example, the beamforming control information may indicate a specific codeword of the codebook. The control device 150 may transmit the beamforming control information including the specific codeword to the RIS 140 in order to configure a specific phase pattern in the RIS 140.

In operation 907, the control device 150 may transmit a control signal for providing the beamforming control information to the RIS 140. The control device 150 may be connected to the RIS 140 through a control interface. The control device 150 may transmit the control signal through the control interface.

Although not illustrated in FIG. 9, the control device 150 may initiate operations of FIG. 9 in response to a specific event (e.g., a decrease in a channel quality). If the channel quality is lowered, the control device 150 may identify whether an obstacle exists in order to check a cause of the lowered channel quality. This is because, as the obstacle blocks the communication path between the base station 110 and the RIS 140, signals may not be sufficiently provided to the RIS 140. In addition to a channel quality, the channel quality may be referred to as a communication quality, a communication status, a communication performance, a link status, a link quality, a link performance, or an equivalent technical term thereto. In addition to a parameter that simply compares a channel quality with a threshold, an event that determines deterioration in the communication performance may be confirmed through the number of NACKs, the number of decoding failures, a handover, or whether a radio link failure (RLF) occurs. For example, in a case that a reception signal strength (e.g., an RSRP) obtained by a report of the terminal 120 in the base station 110 is lower than a threshold, the control device 150 may identify whether the obstacle is positioned in the communication path between the communication device and the RIS 140. For example, if the number of NACKs in a hybrid automatic repeat request (HARQ) entity exceeds a reference number (e.g., 10 times), the control device 150 may identify whether the obstacle is positioned in the communication path between the communication device and the RIS 140. For example, if the number of handover from a cell of the base station 110 to a cell of another node exceeds a reference number (e.g., 10000 times), the control device 150 may identify whether the obstacle is positioned in the communication path between the communication device and the RIS 140.

FIG. 10 illustrates a gain according to phase distortion compensation in an RIS (e.g., an RIS 140).

Referring to FIG. 10, a graph 1000 indicates a gain of incident signals in the RIS (e.g., the RIS 140). A horizontal axis of the graph 1000 indicates a direction (unit: degree) of a beam pattern of the incident signals, and a vertical axis of the graph 1000 indicates a beam gain (unit: decibel (dB)). A first line 1001 indicates a gain of the incident signals when there is no obstacle. A second line 1002 indicates a gain of incident signals using a default phase pattern (e.g., a set of phase values applied to each unit cell) configured by assuming an LOS environment when there is an obstacle. A third line 1003 indicates a gain of incident signals using beamforming control information according to embodiments when there is an obstacle. For example, the obstacle may include a cylinder. A radius of the cylinder may be approximately 20 mm, and a height of the cylinder may be approximately 40 mm. The beamforming control information indicates a phase pattern (e.g., a set of phase values applied to each unit cell) calculated based on phase distortion information for the obstacle. Based on boresight of approximately 0 degrees, it is confirmed that a gain when using the default phase vector is approximately -6.93 dB, but a gain when using the beamforming control information is approximately -4.03 dB. A gain of approximately 2.9 dB may be obtained by compensating for an influence due to the obstacle using the phase distortion information.

A fourth line 1004 indicates a gain of incident signals using a default phase pattern configured by assuming an LOS environment when there is an obstacle. A fifth line 1005 indicates a gain of incident signals using beamforming control information according to embodiments when there is an obstacle. For example, the obstacle may include a cylinder. A radius of the cylinder may be approximately 40 mm, and a height of the cylinder may be approximately 40 mm. Based on boresight of approximately 0 degrees, it is confirmed that a gain when using the default phase pattern is approximately -14.71 dB, but a gain when using the beamforming control information is approximately -8.74 dB. A gain of approximately 5.97 dB may be obtained by compensating for an influence due to the obstacle using the phase distortion information.

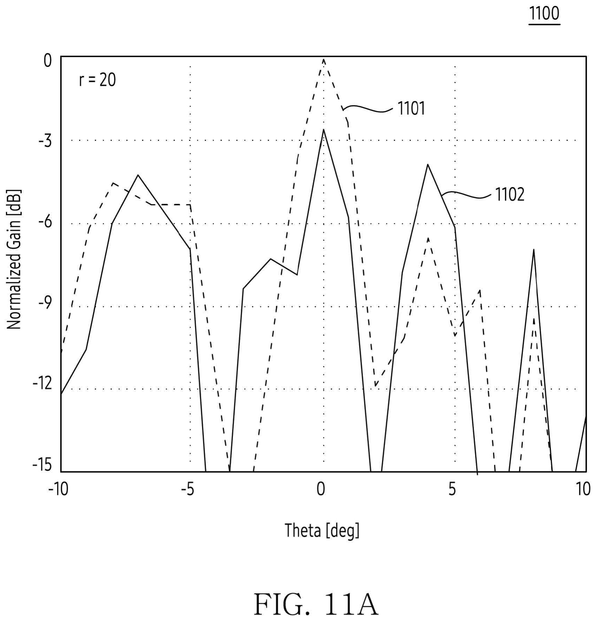

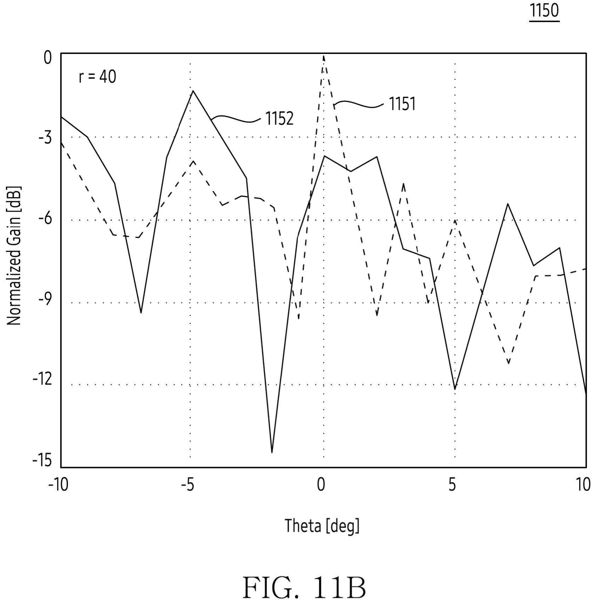

FIGS. 11A and 11B illustrate gains according to a size of an obstacle and phase distortion compensation. Signals may be transmitted from a transmitting end (e.g., a base station 110), and the transmitted signals may be reflected through an RIS 140 and transmitted to a receiving end (e.g., a terminal 120). In FIGS. 11A and 11B, a gain of the receiving end according to an obstacle and phase distortion compensation is illustrated.

Referring to FIG. 11A, a graph 1100 indicates a gain change according to an obstacle. A horizontal axis of the graph 1100 indicates a direction (unit: degrees) of a beam pattern of the signals, and a vertical axis of the graph 1100 indicates a beam gain (unit: dB). The obstacle may be a cylinder, and a radius r of the cylinder may be approximately 20 mm, and a height of the cylinder may be approximately 40 mm. A first line 1101 indicates a gain of the receiving end (e.g., the terminal 120) when a default phase pattern configured by assuming an LOS environment in the RIS 140 is configured in the RIS 140. A second line 1102 indicates a gain of the receiving end when a phase pattern configured based on phase distortion information for the obstacle is configured in the RIS 140. Based on boresight of approximately 0 degrees, a gain of approximately 2.61 dB may be confirmed by compensating for an influence due to the obstacle using the phase distortion information.

Referring to FIG. 11B, a graph 1150 indicates a gain change according to an obstacle. A horizontal axis of the graph 1150 indicates a direction (unit: degrees) of a beam pattern of the signals, and a vertical axis of the graph 1100 indicates a beam gain (unit: dB). The obstacle may be a cylinder, and a radius r of the cylinder may be approximately 40 mm, and a height of the cylinder may be approximately 40 mm. A first line 1151 indicates a gain of the receiving end (e.g., the terminal 120) when a default phase pattern configured by assuming an LOS environment in the RIS 140 is configured in the RIS 140. A second line 1152 indicates a gain of the receiving end when a phase pattern configured based on phase distortion information for the obstacle is configured in the RIS 140. Based on boresight of approximately 0 degrees, a gain of approximately 3.72 dB may be confirmed by compensating for an influence due to the obstacle using the phase distortion information.

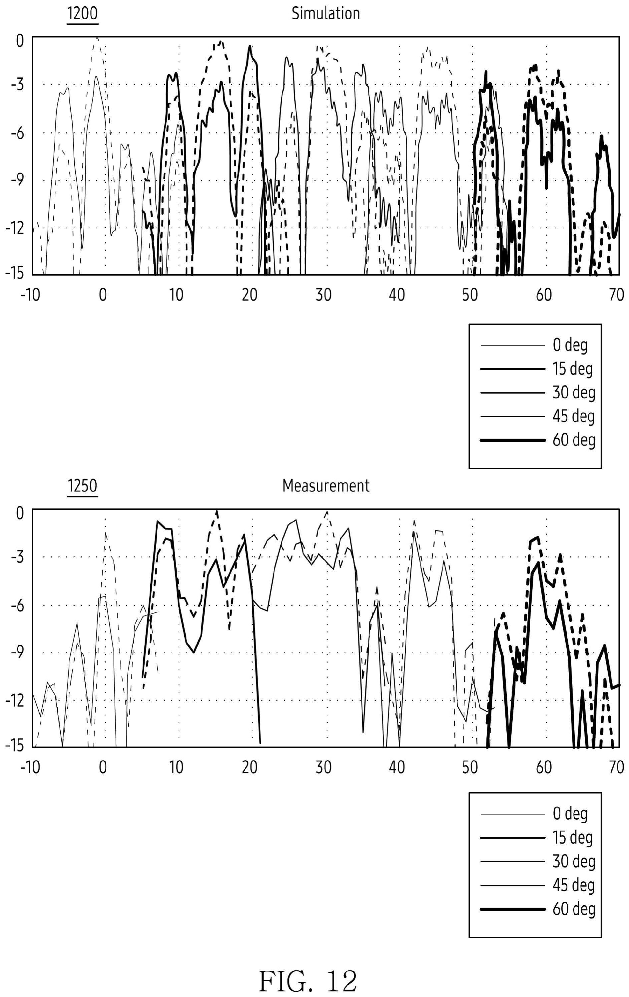

FIG. 12 illustrates a gain according to a beamforming angle and phase distortion compensation. Signals may be transmitted from a transmitting end (e.g., a base station 110), and the transmitted signals may be reflected through an RIS 140 and transmitted to a receiving end (e.g., a terminal 120). A beamforming angle with respect to the receiving end may vary according to a phase pattern configured in the RIS 140. For example, as illustrated in FIG. 4A, an intended beam direction may vary according to a phase pattern to be applied to the RIS 140. Hereinafter, for convenience of description, a direction vector of signals incident on the RIS 140 may be referred to as an incident vector, and a direction vector of signals reflected from the RIS 140 may be referred to as a reflection vector. The beamforming angle may indicate a difference between a direction (e.g., a (+)y-axis of FIG. 5) perpendicular to a surface of the RIS 140 and a direction of the reflection vector.

Referring to FIG. 12, a graph 1200 indicates a simulation result of measuring a gain change according to an obstacle. A horizontal axis of the graph 1200 indicates an angle (unit: degrees) of the reflection vector based on the direction (e.g., the (+)y-axis of FIG. 5) perpendicular to the surface of the RIS 140, and a vertical axis of the graph 1200 indicates a beam gain (unit: dB). For example, the obstacle may include a cylinder. A radius of the cylinder may be approximately 20 mm, and a height of the cylinder may be approximately 100 mm. A dotted line indicates a gain of reflection signals using a default phase pattern (e.g., a set of phase values applied to each unit cell) configured by assuming an LOS environment when there is the obstacle. A solid line indicates a gain of reflection signals using beamforming control information according to embodiments when there is the obstacle.

A graph 1250 indicates a result of measuring a gain change according to an obstacle. A horizontal axis of the graph 1250 indicates an angle (unit: degrees) of the reflection vector based on the direction (e.g., the (+)y-axis of FIG. 5) perpendicular to the surface of the RIS 140, and a vertical axis of the graph 1200 indicates a beam gain (unit: dB). For example, the obstacle may include a cylinder. A radius of the cylinder may be approximately 20 mm, and a height of the cylinder may be approximately 100 mm. A dotted line indicates a gain of reflection signals using a default phase pattern (e.g., a set of phase values applied to each unit cell) configured by assuming an LOS environment when there is the obstacle. A solid line indicates a gain of reflection signals using beamforming control information according to embodiments when there is the obstacle.

When comparing the dotted line and the solid line in each of the graph 1200 and the graph 1250, it may be confirmed that a gain according to the beamforming control information is higher than a gain according to the default phase pattern. For example, a result of the experiment is as follows.

[Table 1]

| Beamforming angle | Simulation (1200) | Measurement (1250) |
|---|---|---|
| 0 degrees | +3.64 dB | +4.14 dB |
| 15 degrees | +3.03 dB | +3.21 dB |
| 30 degrees | +1.98 dB | +3.27 dB |
| 45 degrees | +3.53 dB | +4.39 dB |

| 60 degrees | +3.95 dB | +2.37 dB |
|---|---|---|

At each beamforming angle, a higher gain may be confirmed at the receiving end when the beamforming control information is configured in the RIS 140 than when the default phase pattern is configured in the RIS 140. The beamforming control information may indicate a phase pattern calculated based on phase distortion information indicating an influence due to the obstacle. The beamforming control information may be configured to alleviate a distortion characteristic due to the obstacle.

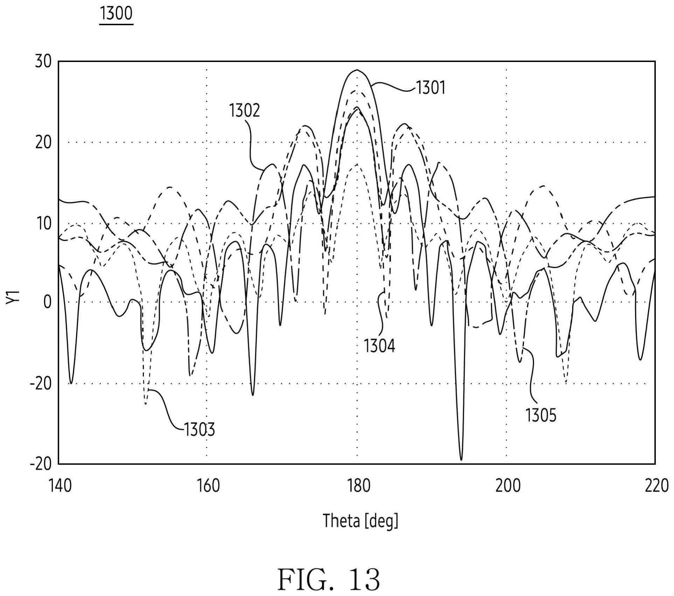

FIG. 13 illustrates a gain according to phase distortion compensation in a reflected array antenna (e.g., a reflected array antenna 850). Functions of an RIS 140 and operations of a control device 150 may also be applied to the reflected array antenna 850 in which a distance between a base station 110 and a reflective surface is relatively close.

Referring to FIG. 13, a graph 1300 indicates a gain of incident signals in an RIS (e.g., the RIS 140). A horizontal axis of the graph 1300 indicates a direction (unit: degrees) of a beam pattern of the incident signals, and a vertical axis of the graph 1300 indicates a beam gain (unit: dB). A first line 1301 indicates a gain of the incident signals when there is no obstacle. A second line 1302 indicates a gain of incident signals using a default phase pattern (e.g., a set of phase values applied to each unit cell) configured by assuming an LOS environment when there is an obstacle. A third line 1303 indicates a gain of incident signals using beamforming control information according to embodiments when there is an obstacle. For example, the obstacle may include a cylinder. A radius of the cylinder may be approximately 20 mm. The beamforming control information indicates a phase pattern (e.g., a set of phase values applied to each unit cell) calculated based on phase distortion information for the obstacle. When comparing the second line 1302 and the third line 1303, it may be confirmed that a gain increases through the beamforming control information by compensating for an influence due to the obstacle using the phase distortion information.

A fourth line 1304 indicates a gain of incident signals using a default phase pattern configured by assuming an LOS environment when there is an obstacle. A fifth line 1305 indicates a gain of incident signals using beamforming control information according to embodiments when there is an obstacle. For example, the obstacle may include a cylinder. A radius of the cylinder may be approximately 10 mm. When comparing the fourth line 1304 and the fifth line 1305, it may be confirmed that a gain increases through the beamforming control information by compensating for an influence due to the obstacle using the phase distortion information.

In the present disclosure, directional communication has been described as an example to describe use of the RIS, but it is noted that this description is not interpreted as limiting a range of frequency at which the RIS operates. The operations of the base station 110, a terminal 102, the RIS (e.g., the RIS 140), and the RIS controller (e.g., the control device 150) according to embodiments of the present disclosure may of course be applied not only to the frequency band (e.g., the mmWave band) for the directional communication, but also to an FR 1 band of an NR or an LTE band.

In embodiments, a control device for a reconfigurable intelligence surface (RIS) is provided. The control device may include at least one transceiver, and at least one processor. The at least one processor may be configured to obtain, based on detection of an obstacle associated with a communication path between a communication device and the RIS, characteristic information for the obstacle. The at least one processor may be configured to obtain phase distortion information for a plurality of unit cells of the RIS based on the characteristic information for the obstacle. The at least one processor may be configured to obtain beamforming control information for the RIS based on the phase distortion information for the plurality of unit cells of the RIS. The at least one processor may be configured to transmit, to the RIS through the at least one transceiver, a control signal for providing the beamforming control information. The beamforming control information may be used to provide reflection signals based on a phase shift for incident signals in the RIS.

According to an embodiment, the beamforming control information may include information for indicating a phase value in each unit cell of the plurality of unit cells of the RIS.

According to an embodiment, the phase distortion information may indicate phase changes according to the obstacle in each unit cell of the plurality of unit cells of the RIS.

According to an embodiment, the phase distortion information may be obtained based on machine learning (ML) using the characteristic information for the obstacle as an input and the phase changes according to the obstacle as an output.

According to an embodiment, the beamforming control information may be obtained based on the phase distortion information and a default phase vector configured in the RIS. The default phase vector may indicate a phase value currently configured in each unit cell of the plurality of unit cells of the RIS.

According to an embodiment, the beamforming control information may indicate a vector having a smallest difference between a reflection pattern according to a corresponding vector and a target reflection pattern among a plurality of vectors of a codebook of the RIS. The reflection pattern according to the corresponding vector may be determined based on the phase distortion information. The target reflection pattern may be a reflection pattern according to the default phase vector before the obstacle is detected.

According to an embodiment, the at least one processor may be, to obtain the characteristic information for the obstacle, configured to obtain image information for a region between the communication device and the RIS through at least one camera. The at least one processor may be, to obtain the characteristic information for the obstacle, configured to detect the obstacle from the image information. The at least one processor may be, to obtain the characteristic information for the obstacle, configured to obtain, based on the detection of the obstacle, the characteristic information for the obstacle based on the image information and information for the region.

According to an embodiment, the characteristic information of the obstacle may include at least one of information related to a position of the obstacle, information related to a shape of the obstacle, information related to a size of the obstacle, or information related to a type of the obstacle.

According to an embodiment, the at least one processor may be, to obtain the characteristic information for the obstacle, configured to obtain a channel quality between the communication device and the RIS.

The at least one processor may be, to obtain the characteristic information for the obstacle, configured to identify whether the obstacle is detected on the communication path between the communication device and the RIS in a case that the channel quality is lower than a threshold. The at least one processor may be, to obtain the characteristic information for the obstacle, configured to obtain the characteristic information for the obstacle in a case that the obstacle is detected on the communication path.

According to an embodiment, the beamforming control information may include voltage information for a phase control. The voltage information may indicate a voltage value to be applied between two metal layers of each unit cell of the plurality of unit cells.

In embodiments, a method performed by a control device for a reconfigurable intelligence surface (RIS) is provided. The method may include obtaining, based on detection of an obstacle associated with a communication path between a communication device and the RIS, characteristic information for the obstacle. The method may include obtaining phase distortion information for a plurality of unit cells of the RIS based on the characteristic information for the obstacle. The method may include obtaining beamforming control information for the RIS based on the phase distortion information for the plurality of unit cells of the RIS. The method may include transmitting, to the RIS, a control signal for providing the beamforming control information. The beamforming control information may be used to provide reflection signals based on a phase shift for incident signals in the RIS.

According to an embodiment, the beamforming control information may include information for indicating a phase value in each unit cell of the plurality of unit cells of the RIS.

According to an embodiment, the phase distortion information may indicate phase changes according to the obstacle in each unit cell of the plurality of unit cells of the RIS.

According to an embodiment, the phase distortion information may be obtained based on machine learning (ML) using the characteristic information for the obstacle as an input and the phase changes according to the obstacle as an output.

According to an embodiment, the beamforming control information may be obtained based on the phase distortion information and a default phase vector configured in the RIS. The default phase vector may indicate a phase value currently configured in each unit cell of the plurality of unit cells of the RIS.

According to an embodiment, the beamforming control information may indicate a vector having a smallest difference between a reflection pattern according to a corresponding vector and a target reflection pattern among a plurality of vectors of a codebook of the RIS. The reflection pattern according to the corresponding vector may be determined based on the phase distortion information. The target reflection pattern may be a reflection pattern according to the default phase vector before the obstacle is detected.

According to an embodiment, the characteristic information of the obstacle may include at least one of information related to a position of the obstacle, information related to a shape of the obstacle, information related to a size of the obstacle, or information related to a type of the obstacle.

In embodiments, an electronic device is provided. The electronic device may include a reconfigurable intelligence surface (RIS) including a plurality of unit cells, and at least one processor. The at least one processor may be configured to configure beamforming control information corresponding to a first phase vector to the RIS. The at least one processor may be configured to obtain, based on detection of an obstacle associated with a communication path between a communication device and the electronic device, characteristic information for the obstacle. The at least one processor may be configured to obtain phase distortion information for the plurality of unit cells based on the characteristic information for the obstacle. The at least one processor may be configured to obtain a second phase vector for the plurality of unit cells based on the phase distortion information for the plurality of unit cells. The at least one processor may be configured to configure the beamforming control information corresponding to the second phase vector to the RIS. The beamforming control information may be used to provide reflection signals based on a phase shift for incident signals in the RIS.

According to an embodiment, the second phase vector may indicate a vector having a smallest difference between a reflection pattern according to a corresponding vector and a target reflection pattern among a plurality of vectors of a codebook of the RIS. The reflection pattern according to the corresponding vector may be determined based on the phase distortion information. The target reflection pattern may be a reflection pattern according to the first phase vector.

According to an embodiment, each unit cell of the plurality of unit cells may include a first metal layer, a second metal layer, and a liquid crystal layer disposed between the first metal layer and the second metal layer. A dielectric constant of the liquid crystal layer may depend on a voltage applied between the first metal layer and the second metal layer. The voltage may be determined according to the first phase vector or the second phase vector.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. A control device for a reconfigurable intelligence surface (RIS), comprising:

   at least one transceiver; and
   at least one processor,
   wherein the at least one processor is configured to:

   obtain, based on detection of an obstacle associated with a communication path between a communication device and the RIS, characteristic information for the obstacle;
   obtain phase distortion information for a plurality of unit cells of the RIS based on the characteristic information for the obstacle;
   obtain beamforming control information for the RIS based on the phase distortion information for the plurality of unit cells of the RIS; and
   transmit, to the RIS through the at least one transceiver, a control signal for providing the beamforming control information,
   wherein the beamforming control information is used to provide reflection signals based on a phase shift for incident signals in the RIS.

2. The control device of claim 1, wherein the beamforming control information comprises information for indicating a phase value in each unit cell of the plurality of unit cells of the RIS.

3. The control device of claim 2, wherein the phase distortion information indicates phase changes according to the obstacle in each unit cell of the plurality of unit cells of the RIS.

4. The control device of claim 3,
   wherein the phase distortion information is obtained based on machine learning (ML) using the characteristic information for the obstacle as an input and the phase changes according to the obstacle as an output.

5. The control device of claim 1,

   wherein the beamforming control information is obtained based on the phase distortion information and a default phase vector configured in the RIS, and

wherein the default phase vector indicates a phase value currently configured in each unit cell of the plurality of unit cells of the RIS.

6. The control device of claim 5,

wherein the beamforming control information indicates a vector having a smallest difference between a reflection pattern according to a corresponding vector and a target reflection pattern among a plurality of vectors of a codebook of the RIS,

wherein the reflection pattern according to the corresponding vector is determined based on the phase distortion information, and

wherein the target reflection pattern is a reflection pattern according to the default phase vector before the obstacle is detected.

7. The control device of claim 1, wherein the at least one processor is, to obtain the characteristic information for the obstacle, configured to:

obtain image information for a region between the communication device and the RIS through at least one camera;

detect the obstacle from the image information; and

obtain, based on the detection of the obstacle, the characteristic information for the obstacle based on the image information and information for the region.

8. The control device of claim 1, wherein the characteristic information of the obstacle includes at least one of information related to a position of the obstacle, information related to a shape of the obstacle, information related to a size of the obstacle, or information related to a type of the obstacle.

9. The control device of claim 1,
wherein the at least one processor is, to obtain the characteristic information for the obstacle, configured to:

obtain a channel quality between the communication device and the RIS,

identify whether the obstacle is detected on the communication path between the communication device and the RIS in a case that the channel quality is lower than a threshold, and

obtain the characteristic information for the obstacle in a case that the obstacle is detected on the communication path.

10. The control device of claim 1,

wherein the beamforming control information comprises voltage information for a phase control, and

wherein the voltage information indicates a voltage value to be applied between two metal layers of each unit cell of the plurality of unit cells of the RIS.

11. A method performed by a control device for a reconfigurable intelligence surface (RIS), the method comprising:

obtaining, based on detection of an obstacle associated with a communication path between a communication device and the RIS, characteristic information for the obstacle;

obtaining phase distortion information for a plurality of unit cells of the RIS based on the characteristic information for the obstacle;

obtaining beamforming control information for the RIS based on the phase distortion information for the plurality of unit cells of the RIS; and

transmitting, to the RIS, a control signal for providing the beamforming control information,

wherein the beamforming control information is used to provide reflection signals based on a phase shift for incident signals in the RIS.

12. The method of claim 11, wherein the beamforming control information comprises information for indicating a phase value in each unit cell of the plurality of unit cells of the RIS.

13. The method of claim 12, wherein the phase distortion information indicates phase changes according to the obstacle in each unit cell of the plurality of unit cells of the RIS.

14. The method of claim 13,
    wherein the phase distortion information is obtained based on machine learning (ML) using the characteristic information for the obstacle as an input and the phase changes according to the obstacle as an output.

15. An electronic device comprising:

    a reconfigurable intelligence surface (RIS) comprising a plurality of unit cells; and
    at least one processor,
    wherein the at least one processor is configured to:

        configure beamforming control information corresponding to a first phase vector to the RIS;
        obtain, based on detection of an obstacle associated with a communication path between a communication device and the electronic device, characteristic information for the obstacle;
        obtain phase distortion information for the plurality of unit cells of the RIS based on the characteristic information for the obstacle;
        obtain a second phase vector for the plurality of unit cells based on the phase distortion information for the plurality of unit cells of the RIS; and
        configure the beamforming control information corresponding to the second phase vector to the RIS,
        wherein the beamforming control information is used to provide reflection signals based on a phase shift for incident signals in the RIS.

FIG. 1

FIG. 2

310

FIG. 3A

FIG. 3B

FIG. 3C

FIG. 4A

FIG. 4B

FIG. 5

FIG. 6A

FIG. 6B

FIG. 7

FIG. 8

OBTAIN CHARACTERISTIC INFORMATION FOR OBSTACLE BASED ON DETECTION OF OBSTACLE RELATED TO COMMUNICATION PATH BETWEEN COMMUNICATION DEVICE AND RIS ～ 901

OBTAIN PHASE DISTORTION INFORMATION FOR PLURALITY OF CELLS OF RIS BASED ON CHARACTERISTIC INFORMATION FOR OBSTACLE ～ 903

OBTAIN BEAMFORMING CONTROL INFORMATION FOR RIS BASED ON PHASE DISTORTION INFORMATION ～ 905

TRANSMIT CONTROL SIGNAL FOR PROVIDING BEAMFORMING CONTROL INFORMATION ～ 907

FIG. 9

FIG. 10

FIG. 11A

FIG. 11B

1200             Simulation

| | 0 deg |
|---|---|
| | 15 deg |
| | 30 deg |
| | 45 deg |
| | 60 deg |

1250             Measurement

| | 0 deg |
|---|---|
| | 15 deg |
| | 30 deg |
| | 45 deg |
| | 60 deg |

FIG. 12

FIG. 13

## INTERNATIONAL SEARCH REPORT

| International application No. |
|---|
| **PCT/KR2024/007267** |

### A. CLASSIFICATION OF SUBJECT MATTER

**H04B 7/04**(2006.01)i; **H04B 7/06**(2006.01)i; **H01Q 15/14**(2006.01)i; **G06V 10/20**(2022.01)i; **G06N 20/00**(2019.01)i

According to International Patent Classification (IPC) or to both national classification and IPC

### B. FIELDS SEARCHED

Minimum documentation searched (classification system followed by classification symbols)

H04B 7/04(2006.01); H04B 7/155(2006.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RIS(reconfigurable intelligence surface), 장애물(obstacle), 유닛 셀(unit cell), 반사 (reflection), 빔포밍 제어 정보(beamforming control information), 위상 왜곡(phase distortion)

### C. DOCUMENTS CONSIDERED TO BE RELEVANT

| Category* | Citation of document, with indication, where appropriate, of the relevant passages | Relevant to claim No. |
|---|---|---|
| Y | US 2023-0093595 A1 (QUALCOMM INCORPORATED) 23 March 2023 (2023-03-23)<br>See paragraphs [0066], [0071]-[0072] and [0099]; and figures 3 and 7. | 1-15 |
| Y | TRAN, Nguyen Minh et al. Reconfigurable Intelligent Surface-Aided Wireless Power Transfer Systems: Analysis and Implementation. arXiv:2106.11805v2. 14 March 2022, pp. 1-24.<br>[Retrieved on 22 August 2024]. Retrieved from <https://arxiv.org/pdf/2106.11805>.<br>See pages 11-12, 16 and 18; and figure 14. | 1-15 |
| Y | SHEEN, Baoling et al. A Digital Twin for Reconfigurable Intelligent Surface Assisted Wireless Communication. arXiv:2009.00454v1. 01 September 2020, pp. 1-10.<br>[Retrieved on 22 August 2024]. Retrieved from <https://arxiv.org/pdf/2009.00454>.<br>See page 4. | 7-8 |
| A | AL-HILO, Ahmed et al. Reconfigurable Intelligent Surface Enabled Vehicular Communication: Joint User Scheduling and Passive Beamforming. arXiv:2101.12247v1. 28 January 2021, pp. 1-12.<br>[Retrieved on 22 August 2024]. Retrieved from <https://arxiv.org/pdf/2101.12247>.<br>See pages 3-4. | 1-15 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 September 2024** | **03 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/007267** |

| C. | DOCUMENTS CONSIDERED TO BE RELEVANT | |
| --- | --- | --- |
| Category* | Citation of document, with indication, where appropriate, of the relevant passages | Relevant to claim No. |
| A | PAN, Cunhua et al. Reconfigurable Intelligent Surfaces for 6G Systems: Principles, Applications, and Research Directions. arXiv:2011.04300v4. 02 May 2021, pp. 1-7. <br> [Retrieved on 22 August 2024]. Retrieved from <https://arxiv.org/pdf/2011.04300>. <br> See pages 2-3. | 1-15 |

Form PCT/ISA/210 (second sheet) (July 2022)

**INTERNATIONAL SEARCH REPORT**
Information on patent family members

International application No.

**PCT/KR2024/007267**

| Patent document cited in search report | | | Publication date (day/month/year) | Patent family member(s) | | | Publication date (day/month/year) |
|---|---|---|---|---|---|---|---|
| US | 2023-0093595 | A1 | 23 March 2023 | CN | 117917025 | A | 19 April 2024 |
| | | | | US | 11695466 | B2 | 04 July 2023 |
| | | | | US | 2023-0291461 | A1 | 14 September 2023 |
| | | | | WO | 2023-044265 | A1 | 23 March 2023 |

Form PCT/ISA/210 (patent family annex) (July 2022)